# FASCICULE DE BREVET EUROPEEN

(11) **EP 2 002 385 B1**
(45) Date de publication et mention de la délivrance du brevet: **05.06.2013**
(21) Numéro de dépôt: 07731854.1
(22) Date de dépôt: 02.04.2007
(51) Int. Cl.: G06K 19/10

(54) **PROCEDE DE LECTURE D'AU MOINS UN CODE A BARRES ET SYSTEME DE LECTURE D'UN CODE A BARRES**
VERFAHREN ZUM LESEN MINDESTENS EINES STRICHCODES UND SYSTEM ZUM LESEN EINES STRICHCODES
METHOD OF READING AT LEAST ONE BAR CODE AND SYSTEM FOR READING A BAR CODE

(30) Priorité: 31.03.2006 FR 0651147
(43) Date de publication de la demande: 17.12.2008
(73) Titulaire: ARJOWIGGINS SECURITY, 92100 Boulogne Billancourt (FR)
(72) Inventeur: GOUELIBO, Didier, F-78720 Cernay La Ville (FR); RANCIEN, Sandrine, F-38140 La Murette (FR)
(74) Mandataire: Leszczynski, André
(86) Numéro de dépôt international: PCT/FR2007/051050
(87) Numéro de publication internationale: WO 2007/113448

(56) Documents cités:
- EP-A- 1 380 982
- EP-A2- 0 656 607
- EP-A2- 0 907 143
- WO-A-01/67375
- WO-A-03/019502
- US-A1- 2004 211 844
- US-A1- 2005 255 599
- US-A1- 2006 022 059

## Description

La présente invention a notamment pour objet un procédé de lecture d'au moins un code à barres porté par un substrat et un système de lecture d'un code à barres.

On connaît par la demande internationale WO 03/081522 un procédé pour à la fois identifier et authentifier un article comportant un code à barres et au moins une zone luminescente imprimée, par exemple de façon adjacente au code à barres. Le lecteur de code à barres comprend une diode émettant un faisceau laser de longueur d'onde prédéterminée qui balaie, lors de la lecture du code, le code à barres et la zone luminescente. Le lecteur comprend un système standard d'analyse de la lumière réfléchie et absorbée par les barres blanches et noires du code à barres et aussi un second détecteur de la fluorescence émise par la zone luminescente. Ce procédé permet d'améliorer la sécurité de l'article car il empêche la reproduction du code à barres simplement par photocopie du fait de la présence de la zone luminescente. Toutefois, ce procédé n'empêche pas une reproduction de la zone luminescente par impression de composés luminescents.

La demande internationale WO 01/28781 décrit une étiquette comprenant un code à barres dont les barres sont réalisées avec un mélange d'une encre sensible à un rayonnement UV et d'une encre sensible à un rayonnement IR. Ce code à barres est invisible à l'oeil nu en lumière ambiante. La lecture du code à barres est réalisée par exposition à une source lumineuse UV diffuse. Une vérification supplémentaire est effectuée à l'aide d'un faisceau IR permettant de révéler la présence de l'encre sensible au rayonnement IR.

Le brevet US 6 824 061 divulgue un dispositif pour la lecture de codes à barres 2D fluorescents ou phosphorescents.

La demande de brevet US 2005/0178832 décrit un livre comportant, d'une part, un dispositif RFID (Radio Frequency Identification Device) disposé sur le volet arrière de la couverture du livre et, d'autre part, un code à barres imprimé sur une page du livre de manière à ce que ce code à barres se juxtapose au dispositif RFID. La lecture du code à barres s'accompagne de celle du dispositif RFID. La présence du dispositif RFID permet de renforcer la sécurité du livre mais entraîne un surcoût.

La demande internationale WO 03/019502 A1 décrit un procédé d'authentification d'une étiquette comprenant un code magnétique et un code optique, une corrélation entre le code optique et le code magnétique permet d'authentifier l'étiquette.

D'une manière générale, l'impression d'un code à barres sur un substrat, par exemple en papier ou en plastique, peut être réalisée de manière relativement aisée, avec un coût relativement faible, ce qui a permis une large diffusion des codes à barres dans de nombreux domaines.

Toutefois, comme indiqué ci-dessus, un code à barres peut être facilement reproduit, par exemple par photocopie.

La présente invention vise notamment à renforcer la protection d'un code à barres contre une tentative de reproduction en liant le code à barres au substrat porteur du code.

L'invention a ainsi pour objet, selon l'un de ses aspects, un procédé de lecture d'au moins un code à barres porté par un substrat, le procédé comportant les étapes suivantes :
a) lors d'une présentation du code à barres à un système de lecture du code à barres, générer de manière automatique, au moins une information d'authentification du substrat liée à une caractéristique physique intrinsèque du substrat et indépendante des données contenues dans le code à barres, et
b) permettre la lecture du code à barres, seulement en cas d'authentification positive du substrat ou lire le code à barres quel que soit le résultat de l'authentification du substrat et en cas d'authentification négative du substrat, empêcher l'accès à une partie seulement des données contenues dans le code à barres et/ou à des données éventuelles associées au code à barres, mémorisées sur un support de données distinct du substrat.

L'authentification du substrat peut reposer par exemple sur une comparaison de l'information d'authentification avec au moins une information de référence, laquelle est par exemple stockée sur un support de données distinct du substrat.

L'invention peut permettre de renforcer la sécurité en assujettissant la lecture du code à barres à la vérification de l'authenticité du substrat associé.

Par exemple, une reproduction frauduleuse, notamment par photocopie, du code à barres sur un substrat n'ayant pas la caractéristique physique intrinsèque attendue peut être facilement détectée au moment de la lecture du code à barres.

Dans une variante le procédé peut comporter l'étape suivante :
- permettre, dans le cas d'une authentification positive du substrat l'accès à des données associées au code à barres mémorisées sur un support de données distinct du substrat.

En variante, le procédé peut comporter l'étape suivante :
- empêcher, en cas d'authentification négative du substrat, l'accès à une partie des données contenues dans le code à barres et/ou à des données éventuelles associées au code à barres, mémorisées sur un support de données distinct du substrat.

Ainsi, même si la lecture du code à barres est permise en cas d'authentification négative du substrat, seules certaines données mémorisées sur le code à barres ou associées à ce code à barres sont accessibles, d'autres données, par exemple les plus sensibles, étant accessibles uniquement en cas d'authentification positive du substrat.

Le procédé peut comporter, si on le souhaite, l'étape suivante :
- en cas d'authentification négative du substrat, générer un avertissement, notamment visuel ou sonore.

Dans un exemple de mise en oeuvre de l'invention, le procédé comporte les étapes suivantes :
- permettre la mémorisation de données associées au code à barres sur un support de données, notamment distinct du substrat,
- en cas d'authentification négative du substrat, mémoriser sur ledit support de données au moins une donnée ayant un lien avec l'authentification négative du substrat.

Ceci permet par exemple d'associer au code à barres une donnée rendant celui-ci inutilisable par la suite.

Le procédé peut comporter l'étape suivante :
- faire dépendre une action concernant le traitement ultérieur du substrat, de l'authentification du substrat.

Par exemple, le procédé peut comporter l'étape suivante :
- en cas d'authentification négative du substrat, transférer, notamment de manière automatique, par exemple à l'aide d'un dispositif de convoyage et/ou de triage, le substrat vers un emplacement de stockage où sont stockés des substrats dont l'authenticité n'a pas été validée.

Le procédé peut comporter l'une au moins des étapes suivantes :
- en cas d'authentification négative du substrat, altérer le code à barres, notamment de manière à empêcher une lecture ultérieure du code à barres, par exemple en produisant sur le code à barres une marque, notamment visible et/ou irréversible,
- en cas d'authentification positive du substrat, produire sur le substrat, par exemple sur le code à barres ou à proximité de celui-ci, une marque, irréversible ou temporaire, notamment visible, permettant par exemple le contrôle d'accès à une exposition ou un spectacle, ou permettant de servir de marque d'oblitération dans le cas par exemple d'un titre de transport.

Dans un exemple de mise en oeuvre de l'invention, la caractéristique physique intrinsèque du substrat est liée à au moins une hétérogénéité du substrat.

Par exemple, lorsque le substrat est réalisé en matière fibreuse, des hétérogénéités peuvent être générées lors de la formation en phase humide du substrat.

Ces hétérogénéités peuvent correspondre à des fluctuations de la densité massique du substrat, par exemple à des zones de densité massique inférieure à celle du reste du substrat.

Les hétérogénéités peuvent former par exemple des tâches claires visibles en lumière transmise.

L'information d'authentification est par exemple liée à la disposition, la taille ou la densité par unité de surface ou de volume des hétérogénéités.

Lorsque le substrat comporte au moins une couche de base et un revêtement, les hétérogénéités peuvent par exemple être formées dans le revêtement lors de son enduction sur la couche de base, les hétérogénéités correspondant par exemple à des fluctuations de la densité massique du revêtement.

Le revêtement est par exemple un couchage iridescent.

Lorsque le substrat est réalisé en matière plastique, les hétérogénéités correspondent par exemple à des manques de matière ou à des bulles de gaz dans la matière plastique.

En variante, les hétérogénéités peuvent être formées par la microstructure de la surface du substrat, notamment lorsque celui-ci est en papier.

Dans un autre exemple de mise en oeuvre de l'invention, le substrat comporte au moins un élément de sécurité dispersé dans la masse du substrat, notamment de manière aléatoire, la caractéristique physique intrinsèque du substrat étant liée à ce ou ces éléments de sécurité.

Les éléments de sécurité peuvent être :
- une matière active telle que par exemple une substance chimique absorbant dans l'UV ou des éléments détectables par fluorescence X,
- une particule, notamment luminescente et/ou fluorescente,
- une fibre telle qu'une fibre magnétique, notamment à magnétisme doux, ou une fibre excitable optiquement, notamment par exposition à un rayonnement IR,
- une planchette.

La caractéristique physique intrinsèque peut correspondre par exemple à au moins une caractéristique optique, électromagnétique, électrique, magnétique, thermique ou acoustique du substrat.

Les éléments de sécurité précités peuvent être agencés pour émettre un signal spécifique lorsqu'ils sont soumis à une excitation extérieure, notamment optronique, électromagnétique, électrique, magnétique, thermique ou acoustique.

La caractéristique physique intrinsèque du substrat servant à l'authentification de celui-ci peut, le cas échéant, être variable dans le temps, du fait par exemple d'un phénomène de rémanence, lorsque le substrat est soumis à une excitation extérieure.

Dans un exemple de mise en oeuvre de l'invention, le procédé comporte les étapes suivantes :
- soumettre le substrat à une première excitation électromagnétique d'une première longueur d'onde, par exemple un rayonnement UV, en vue de vérifier l'authenticité du substrat,
- lire le code à barres en le soumettant à une deuxième excitation électromagnétique d'une deuxième longueur d'onde différente de la première, par exemple un rayonnement lumineux dans le visible, par exemple de couleur rouge.

Dans un exemple de mise en oeuvre de l'invention, la caractéristique physique intrinsèque du substrat est détectée dans une zone d'inspection du substrat, cette zone d'inspection pouvant par exemple être délimitée au moins partiellement par le code à barres. La zone d'inspection présente une superficie plus faible que la surface totale du substrat.

En variante, la caractéristique physique intrinsèque du substrat est détectée sur toute la surface du substrat.

La détection de la caractéristique physique intrinsèque en vue de l'authentification du substrat peut être statique, étant basée sur une zone d'inspection prédéterminée du substrat, ou en variante, dynamique, étant basée sur le balayage d'au moins une zone du substrat, à l'aide notamment d'un rayonnement lumineux de longueur d'onde prédéterminée.

Le code à barres peut être agencé pour être visible à l'oeil nu, en lumière ambiante.

En variante, le code à barres peut être invisible à l'oeil nu, en lumière ambiante, et être réalisé par exemple à l'aide d'une encre excitable sous rayonnement UV ou IR.

Le code à barres peut être obtenu par exemple par impression thermique directe, transfert thermique, transfert matriciel, marquage, par exemple par technique laser, notamment à l'aide d'un laser YAG, un laser bleu ou un laser UV.

Le code à barres peut contenir, le cas échéant, des données cryptées.

Le code à barres peut être de type numérique, tel que par exemple un code EAN8, EAN13, UPC ou ISBN, ou alphanumérique, tel que par exemple le code 39 ou le code 128.

Le code à barres peut être un code 2D, par exemple de type PDF 417, DataMatrix, Maxicode ou QR Code.

On peut encore citer, comme exemples de codes à barres, le code PDB™ commercialisé par la société De La Rue ou le code 2D Superscript commercialisé par la société Datastrip.

Le code à barres peut être réalisé, si on le souhaite, à l'aide d'une encre magnétique. Un tel code est par exemple un code CMC7.

Dans un exemple de mise en oeuvre de l'invention, le procédé permet la lecture de deux codes à barres, notamment identiques, portés respectivement par deux substrats, ces substrats ayant de préférence des éléments de sécurité différents, le procédé comportant les étapes suivantes :
- générer, pour chacun des substrats, au moins une information d'authentification liée à une caractéristique physique intrinsèque du substrat,
- permettre la lecture des codes à barres seulement en cas d'authentification positive des deux substrats, ou
- permettre la lecture d'au moins un code à barres, notamment des deux codes à barres, quel que soit le résultat d'authentification des substrats.

La protection du code à barres peut ainsi être renforcée du fait de deux opérations d'authentification différentes basées sur des éléments de sécurité différents.

L'un des substrats est par exemple formé par un emballage et l'autre des substrats par une étiquette fixée sur l'emballage.

On conclut à l'authenticité de l'emballage lorsque à la fois celui-ci et l'étiquette sont authentifiés.

Dans un exemple, le substrat est associé à un article, par exemple un vêtement, et le procédé comporte les étapes suivantes :
- générer une information d'authentification de l'article, liée à une caractéristique physique intrinsèque de l'article,
- conclure quant à la contrefaçon et/ou la provenance de l'article sur la base de l'authentification du substrat portant le code à barres et celle de l'article.

Le substrat peut être agencé pour former par exemple l'un des éléments suivants :
- un document de sécurité et/ou de valeur, par exemple un chèque, un papier d'identité, une étiquette, un ticket d'entrée à un spectacle ou un ticket de transport,
- un emballage, par exemple une boîte de conditionnement.

Le substrat peut comporter au moins une couche de papier ou, en variante, une couche en matière plastique.

L'invention a encore pour objet, selon un autre de ses aspects, un ensemble comportant au moins deux substrats comprenant chacun un code à barres, l'un des substrats, par exemple une étiquette, étant fixé sur l'autre substrat, par exemple un emballage.

Les substrats peuvent comporter des éléments de sécurité différents.

Les codes à barres des deux substrats peuvent être identiques, le cas échéant.

A titre d'example, un ensemble peut comporter un article, par exemple un vêtement, et un substrat associé à cet article, le substrat comprenant un code à barres, formant par exemple une étiquette et étant notamment attaché à l'article.

L'une au moins des portions de l'article et le substrat peuvent comporter des éléments de sécurité, notamment identiques, servant à l'authentification de l'article et du substrat.

A titre d'exemple, un système de lecture d'un code à barres peut comporter:
- une unité de lecture d'un code à barres, notamment de type optique et/ou magnétique,
- une unité d'authentification agencée pour détecter au moins une caractéristique physique intrinsèque d'un substrat indépendamment de données contenues dans le code à barres.

L'unité d'authentification peut comporter l'un au moins d'une source d'excitation et d'un détecteur, de type optique, électromagnétique, électrique, magnétique, thermique ou acoustique.

L'unité d'authentification peut encore comporter une première source de rayonnement lumineux d'une première longueur d'onde et l'unité de lecture une deuxième source de rayonnement lumineux d'une deuxième longueur d'onde différente de la première.

En variante, les unités d'authentification et de lecture utilisent une source de rayonnement lumineux commune.

Le système peut être agencé pour émettre un avertissement, notamment visuel ou sonore, en cas d'authentification négative d'un substrat.

Le système peut comporter par exemple un témoin lumineux agencé pour s'allumer en cas d'authentification négative du substrat, ou émettre une lumière d'une première couleur, par exemple de couleur verte, en cas d'authentification positive du substrat, et une lumière d'une deuxième couleur, par exemple de couleur rouge, en cas d'authentification négative.

Le système peut comporter une unité de traitement reliée aux unités d'authentification et de lecture et agencée pour commander la lecture du code à barres par l'unité de lecture lorsque l'authentification du substrat par l'unité d'authentification est positive.

En variante, l'unité de traitement est agencée pour commander la lecture du code à barres par l'unité de lecture quel que soit le résultat de l'authentification du substrat par l'unité d'authentification et en cas d'authentification négative du substrat, empêcher l'accès à une partie seulement des données contenues dans le code à barres et/ou à des données éventuelles associées au code à barres, mémorisées sur un support de données distinct du substrat.

L'unité de traitement peut encore être agencée pour commander la lecture du code à barres par l'unité de lecture quel que soit le résultat de l'authentification du substrat par l'unité d'authentification et en cas d'authentification négative du substrat, empêcher l'accès à une partie seulement des données contenues dans le code à barres et/ou à des données éventuelles associées au code à barres, mémorisées sur un support de données distinct du substrat.

L'unité de traitement peut aussi être agencée pour permettre la mémorisation de données associées au code à barres sur un support de données distinct du substrat et en cas d'authentification négative du substrat, mémoriser sur ledit support de données au moins une donnée ayant un lien avec l'authentification négative du substrat.

L'unité de traitement peut également être agencée pour transférer, en cas d'authentification négative du substrat, notamment de manière automatique, le substrat (37) vers un emplacement de stockage où sont stockés des substrats dont l'authenticité n'a pas été validée.

L'unité de traitement peut en outre être agencée pour altérer le code à barres, en cas d'authentification négative du substrat, notamment en produisant sur le code à barres une marque, notamment visible et/ou irréversible.

L'unité de traitement peut enfin être agencée pour produire sur le substrat, notamment sur le code à barres, en cas d'authentification positive, une marque, irréversible ou temporaire, notamment visible.

Le système de lecture peut, le cas échéant, former un appareil unitaire.

Les unités d'authentification et de lecture peuvent, si on le souhaite, être disposées dans un organe de lecture notamment agencé pour pouvoir être manipulé manuellement par un utilisateur, cet organe de lecture tenant par exemple dans une main.

Cet organe de lecture comporte avantageusement au moins une poignée et peut être relié à une unité de traitement par une liaison filaire ou, en variante, non filaire.

Le système de lecture peut être agencé, le cas échéant, pour permettre d'authentifier le substrat et de lire le code à barres sans avoir à déplacer, entre ces deux opérations, le substrat par rapport au système de lecture.

Le système de lecture peut être disposé, le cas échéant, sur une chaîne de traitement du substrat, équipée par exemple d'un dispositif de convoyage du substrat, les unités de lecture et d'authentification étant notamment disposées l'une à la suite de l'autre permettant de réaliser les opérations d'authentification et de lecture de manière successive.

Dans un exemple, les unités d'authentification et de lecture sont logées dans un dispositif comportant une zone de réception des substrats à traiter, ce dispositif étant notamment agencé pour être disposé à demeure dans un local, en fonctionnement normal.

A titre d'exemple, un ensemble peut comporter
- un système de lecture tel que défini ci-dessus,
- un substrat comportant un code à barres, les données contenues dans le code à barres étant notamment indépendantes de caractéristiques physiques intrinsèques du substrat.

La présente invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un système de lecture d'un code à barres et un emballage comportant un code à barres,
- la figure 2 représente, schématiquement et partiellement, un organe de lecture du système de la figure 1,
- les figures 3 à 6 illustrent, schématiquement et partiellement, différents exemples de codes à barres,
- la figure 7 représente, schématiquement et partiellement, une étiquette comportant un code à barres,
- la figure 8 représente, schématiquement et partiellement, un chèque comportant un code à barres de type CMC7,
- la figure 9 représente, schématiquement et partiellement, un système de lecture,
- la figure 10 représente, schématiquement et partiellement, un papier d'identité comportant un code à barres,
- la figure 11 est une vue, schématique et partielle, d'une boîte de conditionnement et d'une étiquette collée sur cette boîte, avec chacune un code à barres,
- la figure 12 représente, schématiquement et partiellement, un vêtement avec une étiquette attachée sur celui-ci,
- la figure 13 représente, schématiquement et partiellement, un substrat comportant un code à barres altéré, et
- la figure 14 représente, schématiquement et partiellement, un document d'identité comportant un code à barres.

### Exemple 1

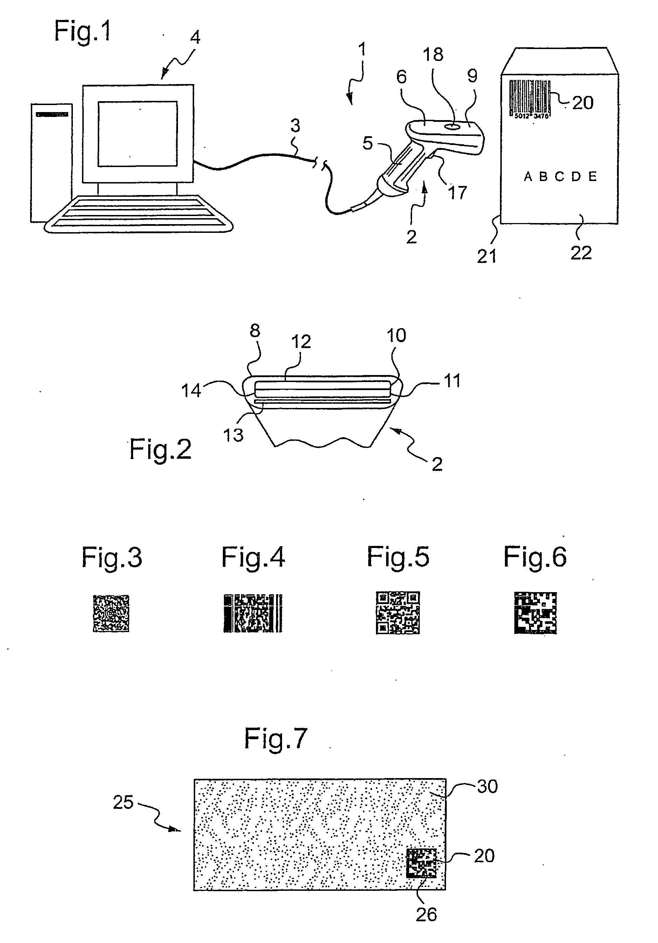

On a représenté sur la figure 1 un système de lecture 1 permettant la lecture d'un code à barres. Ce système 1 comporte un organe de lecture 2 relié par exemple par une liaison filaire 3 à une unité de traitement 4, par exemple un ordinateur.

L'organe de lecture 2 comporte une poignée 5 permettant à un utilisateur de manipuler celui-ci à la manière d'un pistolet.

Dans l'exemple illustré, l'organe de lecture 2 comporte un boîtier 9 définissant une tête 6 et la poignée 5, cette tête 6 présentant une fenêtre de lecture 8, comme illustré sur la figure 2.

L'organe de lecture 2 comporte une unité de lecture 10 du code à barres et une unité d'authentification 11.

L'organe de lecture 2 peut comporter une gâchette 17 pour déclencher la lecture du code à barres.

L'unité de lecture 10 comporte, derrière la fenêtre de lecture 8, un capteur 12 du type CCD linéaire agencé pour permettre la réception de signaux lumineux provenant d'un code à barres 20 lorsque celui-ci est éclairé à l'aide d'une source d'éclairage 13 de l'organe de lecture 2.

Dans l'exemple considéré, cette source d'éclairage 13 comporte par exemple une ou plusieurs diodes électroluminescentes (LED), permettant d'émettre une lumière visible rouge, par exemple de longueur d'onde d'environ 626 nm.

Le capteur 12 permet de lire des codes à barres de type 1D ou 2D, à une distance relativement faible, comprise par exemple entre 0 et 10 cm.

L'unité d'authentification 11 comporte, derrière la fenêtre de lecture 8, un détecteur 14, comprenant par exemple une photodiode associée à un filtre adapté au rayonnement proche IR et éventuellement une fibre optique en vue d'améliorer la collecte de la lumière.

L'unité d'authentification 11 peut comporter un microprocesseur, non représenté, agencé pour analyser des caractéristiques, notamment spectrales, de la lumière collectée par le détecteur 14.

Le système de lecture 1 permet de lire un code à barres 20 porté par un substrat 21 formant, dans l'exemple considéré, une boîte de conditionnement 22, notamment pour un médicament, un produit cosmétique ou un produit alimentaire, cette liste n'étant pas limitative.

Le substrat 21 est par exemple réalisé à base de papier et le code à barres 20 peut être apposé sur ce substrat 21 par transfert thermique.

En variante, le code à barres est réalisé sur le substrat 21 par impression thermique directe, transfert matriciel, marquage, par exemple par technique laser, notamment à l'aide d'un laser YAG, un laser bleu ou un laser UV.

Le code à barres 20 est par exemple un code à barres du type EAN8, EAN13, UPC ou ISBN.

En variante, le code à barres peut être un code à barres de type 2D, par exemple de type PDF 417 (voir figure 4), DataMatrix (voir figure 6), Maxicode (voir figure 3) ou QR Code (voir figure 5).

Les codes 2D peuvent encoder par exemple environ 1 Mo d'informations.

Le substrat 21 comporte des éléments de sécurité ou traceurs incorporés dans sa masse lors de sa fabrication.

Les éléments de sécurité sont choisis de manière à permettre l'émission d'un rayonnement IR, avec un spectre spécifique, lorsque ces éléments de sécurité sont excités avec la lumière visible rouge utilisée pour la lecture du code à barres 20.

Ces éléments de sécurité comportent par exemple une matière active telle que celle commercialisée sous la dénomination SecuSystem^{®} par la société PitKit.

La source d'éclairage 13 de l'organe de lecture 2 sert à la fois pour la lecture du code à barres 20 et pour l'authentification du substrat 21.

Dans l'exemple considéré, l'unité de traitement 4 est agencée pour commander, simultanément à une lecture du code à barres 20 par l'unité de lecture 10, l'authentification du substrat 21 par l'unité d'authentification 11.

La lecture du code à barres 20 est indépendante du résultat de l'authentification du substrat 21.

L'unité de traitement 4 est agencée pour permettre la comparaison d'une information d'authentification liée à une caractéristique physique intrinsèque du substrat 21 définie, dans l'exemple considéré, par le spectre du rayonnement IR émis par les éléments de sécurité et collecté par le détecteur 14, avec une information de référence, notamment un spectre de référence, afin de conclure sur l'authenticité du substrat 21.

L'unité de traitement 4 peut être agencée pour permettre l'accès, à chaque lecture d'un code à barres, aux données mémorisées sur le code à barres 20, indépendamment du résultat de l'authentification du substrat 21.

L'unité de traitement peut également permettre, quel que soit le résultat de l'authentification du substrat, d'accéder à des données complémentaires associées au code à barres lu, mémorisées sur un support de données distinctes du substrat 21, par exemple sur une mémoire de l'unité de traitement 7.

L'organe de lecture 2 peut comporter un ou plusieurs témoins lumineux 18 disposés sur l'extérieur du boîtier 9 et agencés pour émettre une lumière d'une première couleur, par exemple de couleur verte, en cas d'authentification positive du substrat 21, et une lumière d'une deuxième couleur, par exemple de couleur rouge, en cas d'authentification négative.

### Exemple 2

On a représenté sur la figure 7 une étiquette adhésive 25 formée par un substrat 30 comportant un code à barres 20, par exemple de type 2D tel qu'un code DataMatrix.

L'étiquette 25 est réalisée par exemple à base de matière plastique et agencée de manière à être altérée en cas de tentative de décollement de cette étiquette 25 d'un support sur lequel elle est collée.

Une telle étiquette 25 peut être analogue à une étiquette STES commercialisée par la société ARJOWIGGINS.

Le substrat 30 comporte dans sa masse par exemple des éléments de sécurité fluorescents sous excitation d'un rayonnement UV à 365 nm.

La fluorescence de ces éléments de sécurité est choisie de manière à ne pas affecter la lecture optique du code à barres 20.

Ces éléments de sécurité sont par exemple des particules fluorescentes de couleur jaune à la fois en lumière ambiante et sous rayonnement UV, des fibres de couleur bleue en lumière ambiante et ayant une fluorescence bleue sous UV, ou des fibres invisibles à l'oeil nu et ayant une fluorescence rouge sous UV.

Les éléments de sécurité sont dispersés au sein du substrat 30 de manière à être présents dans la zone 26 couverte par le code à barres 20.

La lecture du code à barres 20 et l'authentification du substrat 30 sont réalisées à l'aide d'un système de lecture, non représenté, comprenant :
- une première source d'éclairage comportant par exemple une LED apte à émettre un rayonnement visible de couleur rouge à 626 nm,
- une unité de lecture d'un code à barres avec un capteur bi-dimensionnel agencé pour lire à la fois des codes à barres linéaires et des codes à barres matriciels 2D, sous exposition à la première source d'éclairage,
- une deuxième source d'éclairage, par exemple au moins une LED, apte à émettre un rayonnement UV à 365 nm, associée à une lentille pour focaliser ponctuellement le rayonnement de cette deuxième source.
- un jeu de fibres optiques avec des détecteurs et spectrophotomètres agencés pour permettre la décomposition spectrale du rayonnement visible émis par le substrat 30 sous excitation UV de la deuxième source d'éclairage.

En vue de garantir la confidentialité de données alphanumériques encodées dans le code à barres ou de données associées à ce code à barres mémorisées sur un support de données distinct du substrat 30, l'accès à ces données est, dans l'exemple considéré, conditionné à l'authentification du substrat 30.

Dans le cas où la signature spectrale des éléments de sécurité présents dans le substrat 30, en particulier dans la zone d'inspection 26, ne correspond pas à une signature spectrale de référence attendue, le système de lecture commande l'émission d'un avertissement, notamment visuel ou sonore, afin d'avertir l'utilisateur du fait que le substrat 30 n'a pas été authentifié correctement, et interdit l'accès aux données alphanumériques mémorisées sur le code à barres ou associées à celui-ci.

### Exemple 3

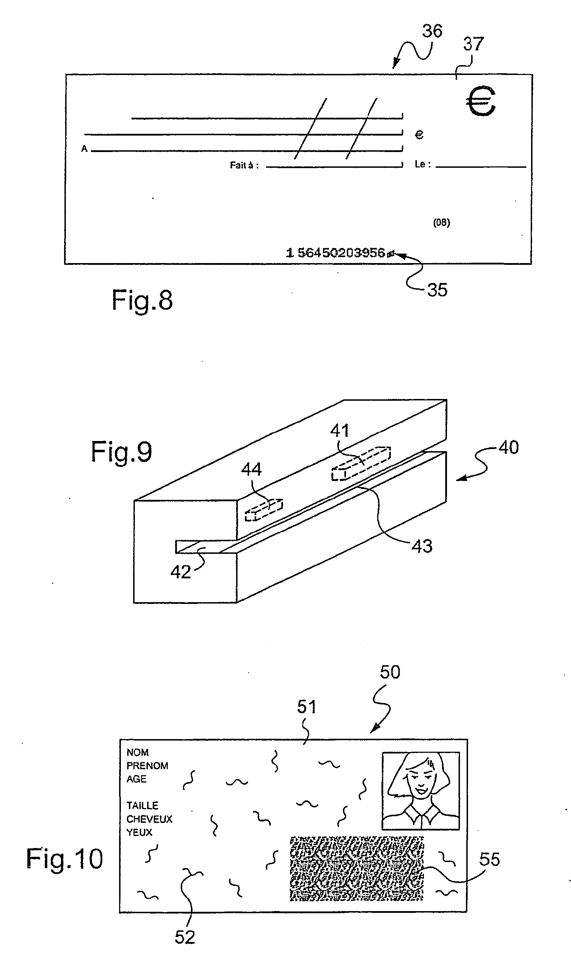

On va maintenant décrire, en référence à la figure 9, un système de lecture 40 permettant de lire un code à barres 35 de type CMC7 d'un document 36 tel qu'un chèque, illustré sur la figure 8.

Le document 36 comporte un substrat 37 en papier incorporant des éléments de sécurité tels que par exemple des traceurs de dénomination Traceless^{®} commercialisés par la société CREO, excitables sous rayonnement IR.

Le code à barres 35 est imprimé à l'aide d'une encre magnétisable.

Le système de lecture 40 comporte :
- une unité de lecture 41 pourvue :
   ● d'un scanner permettant une lecture optique du code à barres 35,
   ● d'un aimant et une tête de lecture magnétique permettant une lecture magnétique du code à barres 35 lorsque celui-ci est magnétisé grâce à l'aimant, la lecture optique et la lecture magnétique pouvant notamment être réalisées simultanément,
- un dispositif de convoyage 42 permettant d'amener le document 36 dans une zone de lecture 43, au droit de l'unité de lecture 41,
- une unité d'authentification 44 comportant par exemple une LED émettant dans le spectre IR, à la longueur d'onde d'excitation des éléments de sécurité, et un pavé de photodiodes avec des filtres IR.

Lors du passage du document 36 dans le système de lecture 40, l'authenticité du substrat est vérifiée sur la base de la signature spectrale générée par les éléments de sécurité.

Lorsque le substrat 37 ne présente pas la signature spectrale attendue, le document 36 est considéré comme falsifié ou contrefait, et transféré grâce à un dispositif de convoyage, non représenté, vers un emplacement où sont stockés des substrats non validés.

En cas d'authentification positive du substrat 37, le système de lecture 40 procède à la lecture optique et magnétique du code à barres 35.

### Exemple 4

On a représenté sur la figure 10 un document de sécurité et/ou de valeur 50 tel qu'un papier d'identité, comprenant un substrat 51 comportant des fibres métalliques 52 ayant une réponse magnétique spécifique sous excitation d'un champ magnétique.

Les fibres magnétiques 52 qui sont par exemple celles commercialisées sous le nom d'Authentiber^{®} par la société ACS, présentent par exemple un magnétisme doux et sont détectables grâce à un système approprié développé par cette même société. La détection est basée sur l'analyse du signal émis par au moins une fibre métallique dans une zone d'inspection lorsque cette dernière est exposée à un champ magnétique alternatif.

Le document comporte un code à barres 55 imprimé sur le substrat 51 par marquage laser, ce code étant par exemple un code PDB™.

Un système de lecture est prévu pour lire le code à barres 55, ce système étant agencé de manière à permettre la lecture du code à barres seulement en cas d'authentification positive du substrat.

L'authentification du substrat 51 est réalisée en soumettant celui-ci à un champ magnétique et en comparant la signature magnétique mesurée avec une signature de référence.

### Exemple 5

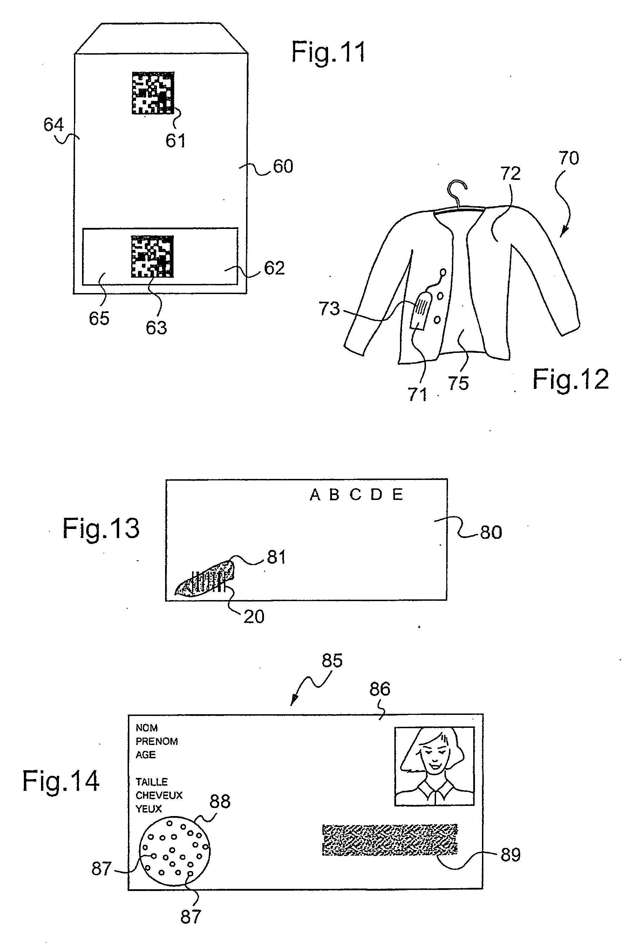

On a représenté à la figure 11 une boîte de conditionnement 60 comportant un code à barres 61 réalisé par micro-perforation au laser, ainsi qu'une étiquette 62 sur laquelle est imprimé un code à barres 63 identique au code à barres 61.

L'étiquette 63 est par exemple collée sur une face extérieure de la boîte de conditionnement 60.

Le substrat 64 utilisé pour la boîte de conditionnement 60 comporte des premiers éléments de sécurité ayant une réponse spectrale IR spécifique lorsque ces éléments de sécurité sont soumis à une lumière visible rouge à 630 nm.

L'étiquette 62 comprend un substrat 65 avec des deuxièmes éléments de sécurité présentant une autre signature spectrale IR, en réponse à une exposition à une lumière visible rouge à 630 nm.

La lecture des codes à barres 61 et 63 et l'authentification des substrats 64 et 65 sont réalisées à l'aide d'un système de lecture, non représenté, comprenant un organe de lecture comportant :
- une source d'éclairage comportant par exemple quatre diodes laser à 630 nm,
- une caméra CMOS 2D (660 (h) × 492 (v) pixels effectifs),
- deux détecteurs IR avec des filtres adéquats capables de détecter les signatures spectrales des premiers et deuxièmes éléments de sécurité.

Le système de lecture vérifie l'authenticité des substrats 64 et 65 et concluent à l'authenticité de l'ensemble seulement lorsque les deux substrats 64 et 65 ont été authentifiés correctement.

### Exemple 6

On a représenté sur la figure 12 un ensemble 70 comportant une étiquette 71 attachée à un article 72 tel qu'un vêtement.

L'étiquette 71 comporte par exemple un substrat en carton non adhésivé et un code à barres imprimé 73.

Le substrat de l'étiquette 71 comporte un marqueur invisible tel que par exemple celui commercialisé par la société australienne DatatraceDNA. Une portion au moins de l'article 72, par exemple la doublure 75 du vêtement, comporte un autre marqueur, de la même société par exemple, introduit dans la résine d'apprêt de la doublure. Ces deux marqueurs présentent une réponse spectrale donnée lorsqu'ils sont soumis à une longueur d'onde lumineuse spécifique.

Un système de lecture, non représenté, est prévu pour permettre de s'assurer que le vêtement n'a pas été détourné sur des marchés parallèles, ce détournement étant souvent accompagné d'une substitution de l'étiquette d'origine par une autre, avec un code à barres différent.

Le système permet également de s'assurer que l'article 72 et l'étiquette 71 n'ont pas été contrefaits.

Le système de lecture peut comporter, par exemple, un scanner à balayage omnidirectionnel pour la lecture du code à barres 73 et une unité d'authentification comportant un système d'excitation à la longueur d'excitation du marqueur et un polygone tournant avec les détecteurs et permettant de vérifier, lors de la lecture du code à barres, la présence des éléments de sécurité dans le substrat de l'étiquette 71 et l'article 72.

Si l'authenticité de l'article 72 est vérifiée mais pas celle de l'étiquette 71, le système de lecture conclut à un détournement de l'article 72, sur un marché parallèle.

Si l'authenticité de l'article 72, comme celle de l'étiquette 71, ne sont pas vérifiées, le système de lecture conclut au fait que l'article 72 a été contrefait.

Dans les deux cas précités, un témoin lumineux est prévu pour avertir l'utilisateur.

Le système de lecture peut être agencé pour envoyer automatiquement des informations de non-conformité de l'article 72 et/ou de l'étiquette 71 vers un support de données sur lequel sont mémorisées des données associées au code à barres 73.

### Exemple 7

Dans l'exemple considéré, en cas de vérification négative de l'authenticité d'un substrat 80, le code à barres 20 porté par ce substrat 80 est altéré de manière à empêcher une lecture ultérieure du code à barres 20. Cette altération peut être réalisée par exemple en produisant sur le code à barres 20 une marque 81, notamment avec une encre visible et/ou irréversible, comme illustré sur la figure 13, par exemple de manière automatique avec un dispositif de marquage approprié.

### Exemple 8

On a représenté sur la figure 14 un document d'identité 85 comprenant un substrat 86 réalisé en matière plastique.

Ce substrat 86 comporte dans sa masse des hétérogénéités formées par des manques de matière ou bulles 87.

Ces hétérogénéités 87 peuvent notamment être formées lors de la fabrication du substrat 86.

Ce type de substrat 86 est par exemple commercialisé par la société Prooftag.

Les bulles 87, situées dans une zone d'inspection 88, définissent une signature unique associée au substrat 86.

Le document 85 comporte un code à barres 89, par exemple du type 2Dsuperscript commercialisé par la société Datastrip.

Ce code à barres 89 contient, de manière cryptée, des données relatives au propriétaire du document d'identité 85 et à la signature du substrat 86.

Lors d'une opération de lecture du code à barres 89, une lecture de la signature dans la zone d'inspection 88 est réalisée à l'aide d'un système optique agencé par exemple pour détecter la position des bulles 87.

La signature obtenue à partir du substrat 86 peut être comparée à celle mémorisée dans le code à barres 89.

S'il y a correspondance entre ces signatures, le document 85 et le code à barres 89 sont considérés comme authentiques.

L'expression « comportant un » doit être comprise comme étant synonyme de l'expression « comportant au moins un », sauf si le contraire est spécifié.

## Revendications

1. Procédé de lecture d'au moins un code à barres (20 ; 35 ; 55 ; 61 ; 63) porté par un substrat (21, 30 ; 37 ; 51 ; 64 ; 65), le procédé comportant les étapes suivantes :
a) lors d'une présentation du code à barres à un système de lecture du code à barres, générer de manière automatique, au moins une information d'authentification du substrat liée à une caractéristique physique intrinsèque du substrat et indépendante des données contenues dans le code à barres, et
b) permettre la lecture du code à barres (20 ; 35 ; 55 ; 61 ; 63), seulement en cas d'authentification positive du substrat ou lire le code à barres quel que soit le résultat de l'authentification du substrat et en cas d'authentification négative du substrat, empêcher l'accès à une partie seulement des données contenues dans le code à barres et/ou à des données éventuelles associées au code à barres, mémorisées sur un support de données distinct du substrat.

2. Procédé selon l'une quelconque des revendications précédentes, comportant l'étape suivante :
- permettre, dans le cas d'une authentification positive du substrat l'accès à des données associées au code à barres mémorisées sur un support de données distinct du substrat.

3. Procédé selon l'une quelconque des revendications précédentes, comportant l'étape suivante :
- en cas d'authentification négative du substrat, générer un avertissement, notamment visuel ou sonore.

4. Procédé selon l'une quelconque des revendications précédentes, comportant les étapes suivantes :
- permettre la mémorisation de données associées au code à barres sur un support de données distinct du substrat,
- en cas d'authentification négative du substrat, mémoriser sur ledit support de données au moins une donnée ayant un lien avec l'authentification négative du substrat.

5. Procédé selon l'une quelconque des revendications précédentes, comportant l'étape suivante :
- faire dépendre de l'authentification du substrat une action concernant le traitement ultérieur du substrat.

6. Procédé selon la revendication précédente, comportant l'étape suivante :
- en cas d'authentification négative du substrat, transférer, de manière automatique, le substrat (37) vers un emplacement de stockage où sont stockés des substrats dont l'authenticité n'a pas été validée.

7. Procédé selon l'une quelconque des revendications précédentes, comportant l'étape suivante :
- en cas d'authentification négative du substrat, altérer le code à barres, de manière à empêcher une lecture ultérieure du code à barres, notamment en produisant sur le code à barres une marque, la marque étant visible et/ou irréversible.

8. Procédé selon l'une quelconque des revendications précédentes, comportant l'étape suivante :
- en cas d'authentification positive du substrat, produire sur le substrat, notamment sur le code à barres, une marque, irréversible ou temporaire, notamment visible.

9. Procédé selon l'une quelconque des revendications précédentes, la caractéristique physique intrinsèque du substrat (86) étant liée à au moins une hétérogénéité du substrat (87).

10. Procédé selon l'une quelconque des revendications 1 à 8, le substrat comportant au moins un élément de sécurité (52) dispersé dans la masse du substrat, de manière aléatoire, la caractéristique physique intrinsèque du substrat étant liée à une partie au moins des éléments de sécurité.

11. Procédé selon la revendication précédente, l'élément de sécurité étant choisi parmi :
- une matière active telle que par exemple une substance chimique absorbant dans l'UV ou des éléments détectables par fluorescence X,
- une particule, notamment luminescente et/ou fluorescente,
- une fibre telle qu'une fibre magnétique, notamment à magnétisme doux, ou une fibre excitable optiquement, notamment par exposition à un rayonnement IR,
- une planchette.

12. Procédé selon l'une quelconque des revendications précédentes, comportant les étapes suivantes :
- soumettre le substrat à une première excitation électromagnétique d'une première longueur d'onde, notamment un rayonnement UV, en vue de vérifier l'authenticité du substrat,
- lire le code à barres en le soumettant à une deuxième excitation électromagnétique d'une deuxième longueur d'onde différente de la première, notamment un rayonnement lumineux dans le visible, par exemple de couleur rouge.

13. Procédé selon l'une quelconque des revendications précédentes, le code à barres étant agencé de manière à être invisible à l'oeil nu, en lumière ambiante, étant réalisé à l'aide d'une encre excitable sous rayonnement UV ou IR.

14. Procédé selon l'une quelconque des revendications précédentes, pour la lecture de deux codes à barres, notamment identiques, portés respectivement par deux substrats, ces substrats ayant de préférence des éléments de sécurité différents, le procédé comportant les étapes suivantes :
- générer, pour chacun des substrats (64 ; 65), au moins une information liée à une caractéristique physique intrinsèque du substrat,
- permettre la lecture des codes à barres (61 ; 63) seulement en cas d'authentification positive des deux substrats, ou
- permettre la lecture d'au moins un code à barres, notamment des deux codes à barres (61 ; 63), quel que soit le résultat de l'authentification des substrats.

## Patentansprüche

1. Verfahren zum Lesen wenigstens eines Strichcodes (20; 35; 55; 61; 63), der auf einem Substrat (21, 30; 37; 51; 64; 65) aufgebracht ist, wobei in dem Verfahren:
(a) wenn der Strichcode einem Strichcode-Lesesystem präsentiert wird, automatisch wenigstens eine Authentifizierungsinformation des Substrats erzeugt wird, die mit einer physischen intrinsischen Charakteristik des Substrats verknüpft und unabhängig von den in dem Strichcode enthaltenen Daten ist, und
(b) das Lesen des Strichcodes (20; 35; 55; 61; 63) nur für den Fall erlaubt wird, dass die Authentifikation des Substrats positiv ist, oder der Strichcode ohne Berücksichtigung des Resultats der Authentifikation des Substrats gelesen wird, und für den Fall einer negativen Authentifikation des Substrats der Zugriff auf nur einen Teil der in dem Strichcode enthaltenen Daten und/oder auf eventuell mit dem Strichcode verknüpfte Daten verhindert wird, die auf einem von dem Substrat verschiedenen Datenträger gespeichert sind.

2. Verfahren nach einem der vorstehenden Ansprüche, in dem:
- für den Fall einer positiven Authentifikation des Substrats der Zugriff auf die mit dem gespeicherten Strichcode verknüpften Daten erlaubt wird, die auf einem von dem Substrat verschiedenen Datenträger gespeichert sind.

3. Verfahren nach einem der vorstehenden Ansprüche, in dem:
- für den Fall einer negativen Authentifikation des Substrats ein, insbesondere visuelles oder akustisches, Warnsignal erzeugt wird.

4. Verfahren nach einem der vorstehenden Ansprüche, in dem:
- das Speichern der mit dem Strichcode verknüpften Daten auf einem von dem Substrat verschiedenen Datenträger erlaubt wird,
- für den Fall einer negativen Authentifikation des Substrats auf dem Datenträger wenigstens eine Dateneinheit gespeichert wird, die eine Verknüpfung mit der negativen Authentifikation des Substrats aufweist.

5. Verfahren nach einem der vorstehenden Ansprüche, in dem:
- die Authentifikation des Substrats abhängig von einer Aktion gemacht wird, die die weitere Behandlung des Substrats betrifft.

6. Verfahren nach dem vorstehenden Anspruch, in dem:
- für den Fall einer negativen Authentifikation des Substrats das Substrat (37) automatisch zu einem Lagerungsort transferiert wird, an dem die Substrate gelagert werden, deren Authentizität nicht validiert werden konnte.

7. Verfahren nach einem der vorstehenden Ansprüche, in dem:
- für den Fall einer negativen Authentifikation des Substrats der Strichcode derart geändert wird, dass ein späteres Lesen des Strichcodes verhindert wird, insbesondere indem auf dem Strichcode eine Markierung erzeugt wird, wobei die Markierung sichtbar und/oder irreversibel ist.

8. Verfahren nach einem der vorstehenden Ansprüche, in dem:
- für den Fall einer positiven Authentifikation des Substrats auf dem Substrat eine Markierung, insbesondere auf dem Strichcode, erzeugt wird, die irreversibel oder temporär, insbesondere sichtbar ist.

9. Verfahren nach einem der vorstehenden Ansprtiche, wobei die physische intrinsische Charakteristik des Substrats (86) mit wenigstens einer Heterogenität des Substrats (87) verknüpft ist.

10. Verfahren nach einem der Ansprüche 1 bis 8, wobei das Substrat wenigstens ein Sicherheitselement (52) aufweist, das in der Sübstratmasse auf zufällige Weise verteilt ist, wobei die physische intrinsische Charakteristik des Substrats wenigstens zum Teil mit dem Sicherheitselement verknüpft ist.

11. Verfahren nach dem vorstehenden Anspruch, wobei das Sicherheitselement ausgewählt ist aus:
- ein Aktivmaterial wie zum Beispiel eine chemische Substanz, die im UV absorbiert, oder durch Röntgenfluoreszenz detektierbare Elemente,
- ein, insbesondere lumineszierendes und/oder fluoreszierendes, Teilchen,
- eine Faser, wie eine magnetische, insbesondere weichmagnetische, Faser, oder eine optisch, insbesondere bei Bestrahlung mit IR, anregbare Faser,
- eine Plakette.

12. Verfahren nach einem der vorstehenden Ansprüche, in dem:
- das Substrat einer ersten elektromagnetischen Anregung mit einer ersten Wellenlänge, insbesondere einer UV-Bestrahlung, unterzogen wird, um die Authentizität des Substrats zu verifizieren,
- der Strichcode gelesen wird, indem er einer zweiten elektromagnetischen Anregung mit einer zweiten von der ersten verschiedenen Wellenlänge, insbesondere einer Bestrahlung mit sichtbarem Licht, beispielsweise Rotlicht, unterzogen wird.

13. Verfahren nach einem der vorstehenden Ansprüche, wobei der Strichcode dazu ausgelegt ist, bei natürlichem Licht für das nackte Auge unsichtbar zu sein, und mittels einer durch UV- oder IR-Bestrahlung anregbaren Tinte realisiert ist.

14. Verfahren nach einem der vorstehenden Ansprüche zum Lesen von zwei, insbesondere identischen, Strichcodes, die jeweils auf zwei Substraten aufgebracht sind, wobei die Substrate vorzugsweise verschiedene Sicherheitselemente aufweisen und in dem Verfahren:
- für jedes der Substrate (64; 65) wenigstens eine Information erzeugt wird, die mit einer physischen intrinsischen Charakteristik des Substrats verknüpft ist,
- das Lesen der Strichcodes (61; 63) nur für den Fall einer positiven Authentifikation der zwei Substrate erlaubt wird, oder
- das Lesen wenigstens eines Strichcodes, insbesondere beider Strichcodes (61; 63), ohne Berücksichtigung des Resultats der Authentifikation des Substrats erlaubt wird.

## Claims

1. A method of reading at least one bar code (20, 35, 55, 61, 63) borne by a substrate (21, 30, 37, 51, 64, 65), the method comprising the following steps:
a) generating, when a bar code is presented to a bar code reader system, automatically, at least one piece of authentication information of the substrate linked with an intrinsic physical characteristic of the substrate and independent of the data contained in the bar code; and
b) allowing the reading of the bar code (20, 35, 55, 61, 63) only in the case of positive authentication of the substrate, or reading the bar code whatever the result of the authentication of the substrate and in the case of negative authentication of the substrate preventing access to only part of the data contained in the bar code and/or to data possibly associated with the bar code, stored on a data medium distinct from the substrate.

2. The method as claimed in any one of the preceding claims, comprising the following step:
- permitting access, in the case of positive authentication of the substrate, to data associated with the bar code, stored on a data medium distinct from the substrate.

3. The method as claimed in any one of the preceding claims, comprising the following step:
- in the case of negative authentication of the substrate, generating a warning, in particular a visual or sound warning.

4. The method as claimed in any one of the preceding claims, comprising the following steps:
- allowing the storage of data associated with the bar code on a data medium distinct from the substrate;
- in the case of negative authentication of the substrate, storing on said data medium at least one piece of data having a link with the negative authentication of the substrate.

5. The method as claimed in any one of the preceding claims, comprising the following step:
- making an action relating to the later processing of the substrate dependent on authentication of the substrate.

6. The method as claimed in the preceding claim, comprising the following step:
- in the case of negative authentication of the substrate, transferring the substrate (37), automatically, to a storage location where substrates whose authenticity has not been validated are stored.

7. The method as claimed in any one of the preceding claims, comprising the following step:
- in the case of negative authentication of the substrate, altering the bar code, in a way to prevent later reading of the bar code, especially by producing a mark, which is visible and/or irreversible, on the bar code.

8. The method as claimed in any one of the preceding claims, comprising the following step:
- in the case of positive authentication of the substrate, producing an irreversible or temporary mark, especially a visible one, on the substrate, especially on the bar code.

9. The method as claimed in any one of the preceding claims, the intrinsic physical characteristic of the substrate (86) being linked with at least one heterogeneity in the substrate (87).

10. The method as claimed in any one of claims 1 to 8, the substrate comprising at least one security element (52) dispersed within the bulk of the substrate, in a random manner, the intrinsic physical characteristic of the substrate being linked with at least part of the security elements.

11. The method as claimed in the preceding claim, the security element being chosen from:
- an active material such as, for example, a UV-absorbent chemical substance or elements detectable by X fluorescence;
- a particle, especially a luminescent and/or fluorescent one;
- a fiber such as a magnetic fiber, especially weakly magnetized, or a fiber that is optically excitable, especially through exposure to IR radiation;
and
- a small board.

12. The method as claimed in any one of the preceding claims, comprising the following steps:
- subjecting the substrate to a first electromagnetic excitation with a first wavelength, especially UV radiation, with a view to verifying the authenticity of the substrate;
- reading the bar code by subjecting it to a second electromagnetic excitation with a second wavelength different from the first, especially visible luminous radiation, for example red.

13. The method as claimed in any one of the preceding claims, the bar code being arranged so as to be invisible to the naked eye in ambient light, being produced by using an ink that is excitable under UV or IR radiation.

14. The method as claimed in any one of the preceding claims, for the reading of two bar codes, especially identical ones, respectively borne by two substrates, these substrates preferably having different security elements, the method comprising the following steps:
- generating, for each of the substrates (64, 65), at least one piece of information linked with an intrinsic physical characteristic of the substrate;
- allowing the reading of the bar codes (61, 63) only in the case of positive authentication of the two substrates; or
- allowing the reading of at least one bar code, especially of the two bar codes (61, 63), whatever the result of the authentication of the substrates.
